# EUROPEAN PATENT SPECIFICATION

(11) **EP 1 918 008 B1**
(45) Date of publication and mention of the grant of the patent: **01.05.2013**
(21) Application number: 06747106.0
(22) Date of filing: 02.06.2006
(51) Int. Cl.: B01D 33/073

(54) **FILTERING APPARATUS AND FILTERING METHOD**
FILTERVORRICHTUNG UND FILTERVERFAHREN
APPAREIL DE FILTRATION ET PROCÉDÉ DE FILTRATION

(30) Priority: 16.06.2005 JP 2005176901; 12.10.2005 JP 2005297390; 12.10.2005 JP 2005297391; 12.10.2005 JP 2005297394; 06.01.2006 JP 2006001792
(43) Date of publication of application: 07.05.2008
(73) Proprietor: Tsukishima Kikai Co., Ltd., Tokyo 104-0051 (JP)
(72) Inventor: TAKAO, Dai, TSUKISHIMA KIKAI CO., LTD., Tokyo 104-0051 (JP); ABE, Ken, TSUKISHIMA KIKAI CO., LTD., Tokyo 104-0051 (JP); MURAZAWA, Takashi, TSUKISHIMA KIKAI CO., LTD., Tokyo 104-0051 (JP); NEO, Kotaro, TSUKISHIMA KIKAI CO., LTD., Tokyo 104-0051 (JP); SATO, Masuhiro, TSUKISHIMA KIKAI CO., LTD., Tokyo 104-0051 (JP); ONO, Motomi, TSUKISHIMA KIKAI CO., LTD., Tokyo 104-0051 (JP)
(74) Representative: Held, Stephan
(86) International application number: PCT/JP2006/311062
(87) International publication number: WO 2006/134784

(56) References cited:
- EP-A1- 0 553 783
- EP-A1- 0 882 677
- DE-A1- 3 806 582
- JP-A- 09 010 522
- JP-A- 2003 038 915
- JP-A- 2004 130 274
- JP-A- 2004 314 130
- JP-B2- 2 735 997
- JP-B2- 59 020 367
- JP-Y2- 2 501 172
- US-A- 4 066 554
- US-A- 5 516 427
- US-B1- 6 634 508

## Description

### TECHNICAL FIELD

The present invention relates to a filtering apparatus and a filtering method.

### BACKGROUND ART

A filter such as a metal screen, metal mesh, and metal perforated plate is excellent in running property, maintenance property, and durability compared with a filter made of cloth (fiber). The metal screen is used in a pressurized type filtering apparatus such as a screw press and a rotary pressurized type dewaterer. The pressurized type filtering apparatus has a long history and extremely simple structure, and the apparatus has the features such as low energy consumption, low noise, and low cost. Because the apparatus obtains excellent dewater performance when applied to a hardly-dewatered solid-liquid mixture having a low dry solid content, the apparatus is frequently used in a sewage sludge dewater field (for example see Patent Documents 1 and 2)
Patent Document 1: Japanese patent Publication Laid-Open No. 2001-212697
Patent Document 2: Japanese patent Publication Laid-Open No. 2001-113109
Document D1 (EP 0882 677 A1) discloses a rotary pressurized type dewatering filter apparatus comprising two rotatable cylindrical filter screens and an static spiral wall located between the screens and connected to the middle flange of the device. The dewatered cake is removed from the opposite side of the feed inlet.

### DISCLOSURE OF THE INVENTION

### PROBLEMS TO BE SOLVED BY THE INVENTION

In the screw press including a cylindrical outer screen and a screw inserted into the outer screen, while a treated feed is transferred from an inlet port side toward an outlet port side at a low speed, the treated feed is continuously dewatered by a squeezing pressure generated by a fastening force of the screw. However, because a filtrate is squeezed only by the outer screen, a length of the outer screen is hardly shortened, and downsizing of the machine is hardly realized.
On the other hand, in the rotary pressurized type dewaterer, in order to improve a throughput of dewatering and filtering, it is necessary to increase a diameter of a disc or it is necessary to provide plural dewaterers. Accordingly, there is a problem in upsizing of the machine or cost increase.
In view of the foregoing, a problem of the invention is to provide a filtering apparatus and a filtering method, in which dewaterperformance is improvedwhiledownsizingof the apparatus is achieved.

### MEANS FOR SOLVING THE PROBLEMS

The invention for solving the above problem according to claim 1 of the current application is described as follows.

The filtering and thickening are performed by two filter medias of the inner screen and outer screen, so that the downsizing of the machine can be achieved compared with the conventional screw press in which the filtering is performed only the outer screen. The inner screen and/or outer screen are/is rotated about the shaft center while the spiral fixed wall is not rotated. Therefore, while the treated feed fed in the filtering room is spirally moved in the apparatus along the fixed wall, the filtering and thickening are performed by the two filter medias of the inner and outer screens, and the squeezing and dewatering are performed. When compared with the screw press having the configuration in which not only the inner and outer screens but also the ribbon screw are rotational, the simplified structure, reduced production cost, and improved maintenance property can be achieved in the filtering apparatus according to the invention.

The fixed wall is supported by the support material fixed to one end and/or the other end of the filtering room. Therefore, because the improvement of the strength and maintenance of the shape are ensured in the fixed wall to which the stress is applied from the treated liquid or cake which is moved according to the transfer, the filtering work can stably be performed and the dewater performance can be enhanced.

The support material is disposed so as to be brought close to or into contact with the inner screen and/or the outer screen, and the support material scrapes out the cake adhering to the screens/screen. Therefore, it is not necessary to separately provide the scraper, and the number of components can be decreased to reduce the production cost.

### <Invention as claimed in claim 2

The invention as claimed in claim 8 is the filtering apparatus according to claim 1, configured such that the inner screen and the outer screen can be rotated with a difference in rotational speed between the inner screen and the outer screen.

### (Operation and Effect)

The inner screen and the outer screen are rotated with the difference in rotational speed between the inner screen and the outer screen, which generates a shearing force in the cake moved in the filtering room. Due to such shearing force, for example, in the treated feed containing a raw sludge or a mixed raw sludge having rich fiber, dewatering efficiency can be improved. In the case where a large relative speed is generated between the inner and the outer screens, an effect of moving the cake near one filter media rotated faster (for example, the filter media of the inner screen) onto the side of the other filter media (for example, the filter media of the outer screen) is exerted to generate mixing action in cakes, so that a moisture content distribution can be unified in the filtering apparatus.

### <Invention as claimed in claim 3

The invention as claimed in claims 3 is the filtering apparatus according to any one of claims 1 to 2, configured such that a pitch of the spiral fixed wall is shortened from the one end side toward the other end side.

### (Operation and Effect)

The pitch of the spiral fixed wall is shortened from the one end side toward the other end side. As a consequence, the cake discharge duct is narrowed to enhance the squeezing effect, and unevenness (distribution) of the moisture content can be eliminated in the discharged cake.

### <Invention as claimed in claim 10>

The invention as claimed in claim 10 is a filtering method in which a filtering apparatus according to claim 1 is used. The filtering method is characterized by including: rotating only the inner screen and/or the outer screen about a shaft center while the spiral fixed wall is not rotated; in this manipulation process, feeding a treated feed into the filtering room from one end side of the filtering room, filtering the treated feed through the inner screen and the outer screen, and discharging each filtrate to an outside; and discharging a cake from the other end side of the filtering room.

### EFFECTS OF THE INVENTION

According to the invention, advantageously the dewater performance is improved while the downsizing of the apparatus is achieved.

### BEST MODES FOR CARRYING OUT THE INVENTION

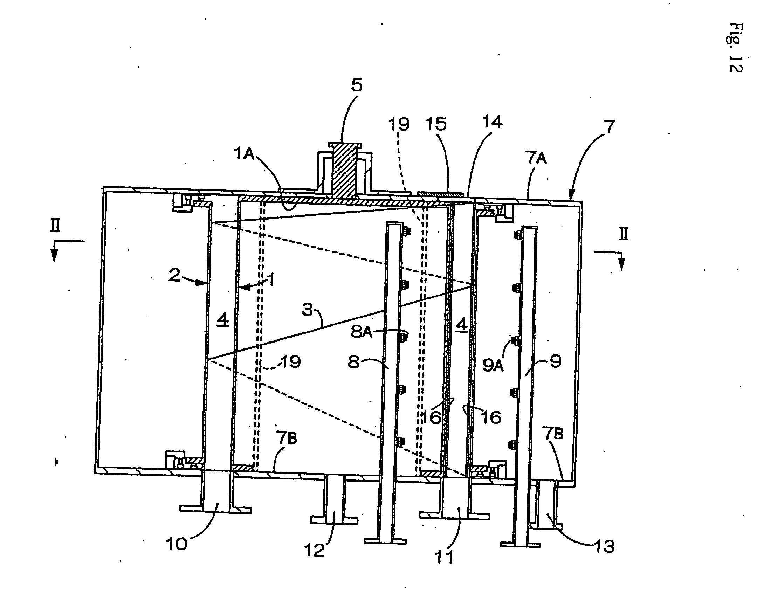

The first embodiment of the invention will be described below with reference to Figs. 12 to 15.

### (Configuration of Filtering Apparatus)

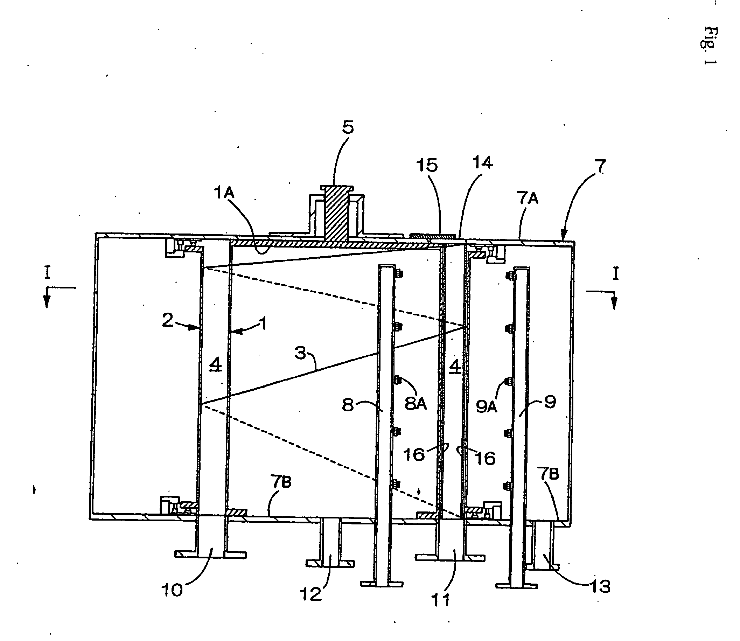

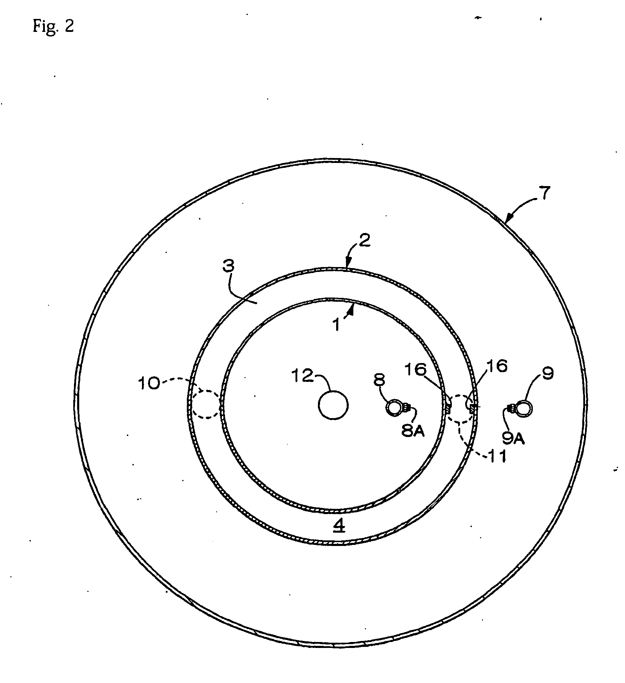

As shown in Figs. 1 and 2, a rotational cylindrical inner screen 1, a rotational cylindrical outer screen 2, and a spiral (ribbon screw-shaped) fixed wall 3 are included in a casing 7 of a filtering apparatus according to a first arrangement of the invention. An upper plate 1A of the inner screen 1 is coupled to an inner cylinder rotating shaft 5 to which a driving force is transmitted by first rotating means (not shown) such as a motor. The outer screen 2 is provided concentric with the inner screen 1. Both end portions of the fixed wall 3 are fixed to an upper plate 7Aand a bottomplate 7B of the casing 7 respectively, and the fixed wall 3 is disposed in a filtering room 4 formed between the inner screen 1 and the outer screen 2. Although the cylindrical casing 7 is used in the first arrangement, the casing 7 is not limited to the cylindrical shape. For example, the casing 7 may be formed in a polyhedral shape.

As shown in Figs. 1 and 2, in the bottom plate 7B of the casing 7, treated feed inlet ports 10 and 11 are formed in a portion where the filtering room 4 is projected. The treated feed is fed from the treated feed inlet ports 10 and 11. Thus treated liquid is pressure fed by a pump (not shown), and the pressure from the pump and friction generated by the rotations of the inner screen 1 and outer screen 2 raise the treated liquid from the bottom to the upper portion of the casing 7. In the case where a shaft center of the apparatus is transversely disposed to transversely situate the whole of the apparatus, only the friction generated by the rotation of the inner screen 1 and outer screen 2 may move the treated liquid without pressure-feeding of the treated liquid with a pump. In this first arrangement, there are, but not limited to, two treated feed inlet ports.

Wedge wires are tensioned as the filter in a side face (outer circumferential surface) of the inner screen 1, and slits of the wedge wires are arranged along a rotating center. In the treated feed fed in the filtering room 4 formed between the inner screen 1 and the outer screen 2, the filtrate is, after solid/liquid separation, partly reserved on the bottom plate 7B located within the inner screen 1 and finally discharged from a filtrate discharge nozzle 12.

The outer screen 2 has a structure in which a circumferential upper end of the outer screen 2 is rotationally hung from the upper plate 7A of the casing 7 by a rail and e.g., rollers guided by the rail. Although not shown, a side face of the upper end is coupled through a pinion gear (not shown) and the like to an outer rotating shaft (not shown) to which the driving force is transmitted by second rotating means (not shown) such as a motor, thereby rotating the outer screen 2. Similarly to the inner screen 1, the wedge wires are tensioned as the filter in an inner circumferential surface of the outer screen 2. The slits of the wedge wires are arranged along a rotating center. In thus treated liquid fed in the filtering room 4, part of the filtrate after solid/liquid separation is reserved on the bottom plate 7B located between the casing 7 and the outer screen 2 and finally discharged from a filtrate discharge nozzle 13.

Even if the inner screen 1 and the outer screen 2 are rotated at the same angular speed (°/sec), a difference in circumferential speed (mm/sec) is generated by a difference in radius between the inner screen 1 and the outer screen 2. Therefore, a shearing force is generated in the cakes to improve the dewatering efficiency. For example, the shearing force is applied more effectively to the treated liquid containing the fiber-rich raw sludge or mixed raw sludge. For this reason, the inner screen 1 and the outer screen 2 are rotated while the difference in angular speed is slightly generated between the inner screen 1 and the outer screen 2, so that the dewatering efficiency can further be improved. In the case where the large relative speed is generated between the inner screen 1 and the outer screen 2, the effect of moving the cake near one filter media rotated faster (for example, the filter media of the inner screen 1) onto the side of the other filter media (for example, the filter media of the outer screen 2) is exerted to generate mixing action in the cakes. Consequently, a moisture content distribution can be unified in the filtering apparatus.

Thus, the shearing force is applied to the cakes by the difference in angular speed between the filter medias of the inner and outer screens 1 and 2, and the dewatering efficiency is improved. Because the effect depends on the property of the target cake, desirably the difference in angular speed between the inner and outer screens 1 and 2 is set according to the property of the cake when the apparatus runs in the optimum state. For this reason, in the first arrangement, rotating means such as motors are separately provided in the inner and outer screens 1 and 2 in order to simply adjust the difference in angular speed.

On the other hand, depending on a property of a cake, the cake is fluidized when a shearing force is applied, whereby dewatering is not successfully performed. In such cases, preferably the inner and outer screens 1 and 2 are rotated at the same angular speed. For a cake in which dewater effect is exerted by a shearing force and a property of the cake is not substantially changed throughout a year, the inner and outer screens 1 and 2 may be rotated at the same angular speed. That is to say, for such target cake, the inner and outer screens 1 and 2 may be rotated at the same angular speed using a single motor.

It is not always necessary to rotate both the inner screen 1 and the outer screen 2, but one of the inner screen 1 and the outer screen 2 may be rotated.

The filter used in the inner and outer screens 1 and 2 is not limited to the wedge wires, but a punched metal (not shown), metal mesh (not shown), filter cloth (not shown), and the like can be used as the filter. The wedge wires whose filter media has a high opening ratio may be disposed in a lower portion of the filtering room 4 in which the solid/liquid separation is mainly performed while the punched metal having a high contact area with the cakes (i.e., low opening ratio) is disposed in an upper portion of the filtering room 4 in which the squeezing and dewatering are mainly performed.

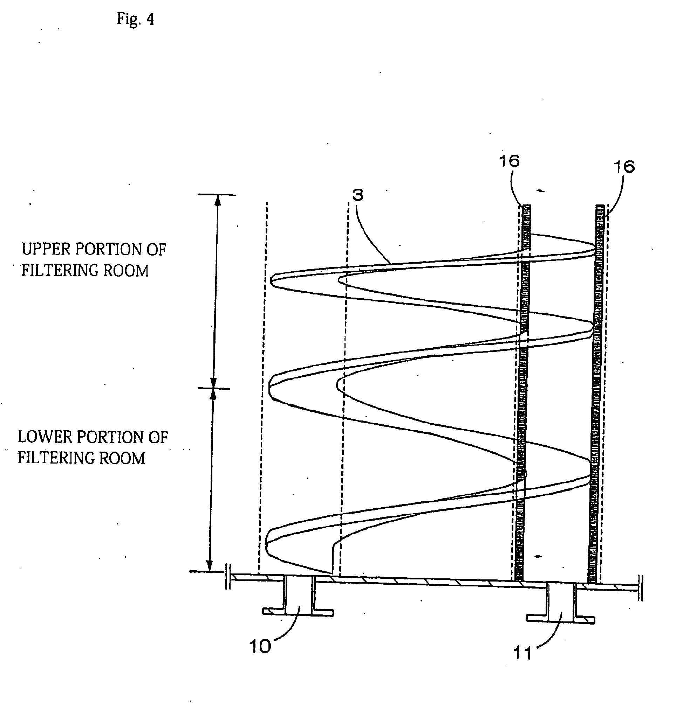

As shown in Figs. 1 and 4, the fixed wall 3 has a spiral (ribbon screw) shape, and the fixed wall 3 is provided in the ring-shaped filtering room 4 formed between the inner screen 1 and the outer screen 2. The fixed wall 3 is fixed to the upper plate 7A and bottom plate 7B of the casing 7, whereby the fixed wall 3 is not rotated about the shaft center. With this configuration, when compared with the screw press having the configuration in which not only the inner and outer screens but also all the ribbon screws are rotational, the simplified structure, reduced production cost, and improved maintenance can be achieved in the filtering apparatus of the present invention.

The fixed wall 3 has a structure in which an inner edge and an outer edge are brought close to or contact with the filter medias of the inner screen 1 and outer screen 2. This structure can easily scrape out the cakes adhering to the filter medias of the inner and outer screens 1 and 2 to maintain the filtering and thickening efficiency and raise the treated liquid fed from the treated feed inlet ports 10 and 11 in a spiral manner along thefixedwall3. Because the filtering and thickening are mainly performed by the solid/liquid separation action in the lower portion of the filtering room 4, i.e., in neighborhoods of the treated feed inlet ports 10 and 11, it is only necessary that, in the inner edge and outer edge of the fixed wall 3, at least the neighborhoods of the treated feed inlet ports 10 and 11 be brought close to or into contact with the inner and outer screens 1 and 2, respectively.

As shown in Fig. 4, when a scraper 16 made of e.g., rubber is attached to the inner edge and outer edge of the fixed wall 3, the inner screen 1 and the outer screen 2 are rotated about the shaft center while the fixed wall 3 is not rotated. This configuration allows the cakes attached to the filter media to be scraped out by the scraper 16. As described above, because the filtering and thickening are mainly performed by the solid/liquid separation action in the lower portion of the filtering room 4, i.e., in the neighborhoods of the treated feed inlet ports 10 and 11, it is only necessary that the scraper be attached to at least the neighborhoods of the treated feed inlet ports 10 and 11.

Although a spiral pitch of the fixed wall 3 is unified in the whole of the filtering room 4, preferably the spiral pitch of the fixed wall 3 is shortened toward the upper plate 7A from the bottom plate 7B of the casing 7 as shown in Figs. 1 and 4 in order to eliminate the unevenness (distribution) of the moisture content of the discharged cake. Specifically, in the upper portion of the filtering room 4, the spiral pitch is shortened and a cake discharge duct is narrowed to enhance the squeezing effect. On the other hand, as shown in Figs. 5 to 8, the difference in radius may be decreased between the inner and outer screens 1 and 2 to improve the dewatering efficiency in the upper portion of the filtering room 4. In this case, although not shown, the spiral pitch of the fixed wall 3 may be lengthened toward the upper plate 7A from the bottom plate 7B of the casing 7.

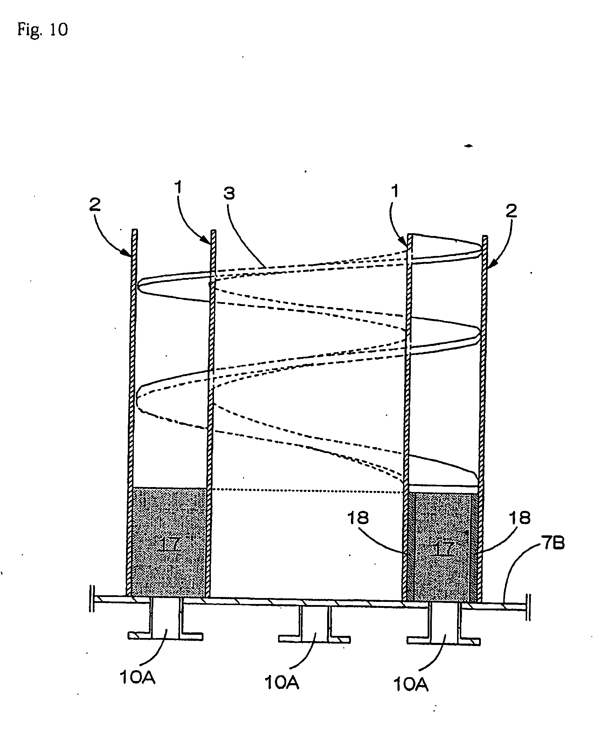

Although not shown, holes through which the cakes pass can be made in a part of the spiral fixed wall 3 to promote the stirring and mixing of the cakes. In the lower portion of the filtering room 4, i.e., in the neighborhoods of the treated feed inlet ports 10 and 11, the lower portion of the fixed wall 3 may be provided while separated from the bottom plate 7B of the casing 7 (the lower portion of the spiral fixed wall 3 may be cut). In this case, the fixed wall 3 can be fixed to the bottom plate 7B of the casing 7 while an arbitrary support rod (for example, a pillar shaped material such as a circular rod 18 shown in Fig. 10) is interposed between the fixed wall 3 and the bottom plate 7.

As shown in Figs. 1 and 4, the scraper 16 is extended along the inner edge and outer edge of the fixed wall 3 in the axial direction of the casing 7 while the upper plate 7A and bottom plate 7B of the casing 7 coincide with end portions of the scraper 16. Although the scraper 16 is attached to the inner edge and the outer edge at each one point in Fig. 4, the scraper 16 may be attached at plural points. In a modification of the first arrangement, the scraper 16 may be attached only to the lower portion of the filtering room 4 in which the solid/liquid separation is mainly performed. Although not shown, as to the method of attaching the scraper 16, the scraper 16 may be disposed only in the bottom plate 7B of the casing 7, the scraper 16 may be disposed so as to couple the bottom plate 7B of the casing 7 and the fixed wall 3, or the scraper 16 may be attached so as to bridge the edges of the fixed wall 3 adjacent to each other in the axial direction. Although not shown, it is also possible that scrapers 16 are not provided in parallel with the axial direction but at front ends of the fixed wall 3 along the inner edge and outer edge of the fixed wall 3, respectively.

As described above, the scraper is made of the rubber or resin which can press the scraper against the filter media by an elastic force. In a modif ication, although not shown, a blade with a spring is attached to the front end of the scraper and the blade is movable in a radial direction of the inner screen 1 and outer screen 2 by the spring.

A relationship among the inner screen 1, the outer screen 2, and the fixed wall 3 will be described below. The treated liquid fed from the treated feed inlet ports 10 and 11 formed in the bottom plate 7B of the casing 7 are in a fluid state having a low dry solid content. In the lower portion of the filtering room 4, the filtering and thickening are generated through openings of the cylindrical filters in the inner screen 1 and outer screen 2. The lower portion of the filtering room 4 mainly has the function of performing the filtering and thickening by the solid/liquid separation action, and the thickened cakes are adhered to the filter media decreasing the filtering efficiency when the filtering and thickening progress to some extent. Therefore, in order to maintain the thickening efficiency, the scraper 16 is attached to the fixed wall 3, and scraping is frequently performed on the surfaces of the filters in the inner screen 1 and outer screen 2 to scrape out the cake adhered to the surfaces of the filters.

Because the cakes in which the fluidity is lost by the thickening action generate friction with the filters, the cakes are transferred in circumferential directions of the inner and outer screens 1 and 2 by the rotating screens. However, the spiral (ribbon screw-shaped) fixed wall 3 is disposed in the filtering room 4, and the cakes rotating along the inner and outer screens 1 and.2 interfere with the fixed wall 3, so that the cakes are moved in the axial direction while rotating about the shaft. The cakes are finallydischarged from a cake discharge 14 formed in the upper portion of the filtering room 4 while filtered and thickened by this movement. As described after, a back pressure plate 15 is attached to the cake discharge 14 to suppress the discharge of the cake. Consequently, the cakes can be consolidated in the filtering room 4 to further decrease the moisture content because the discharge amount of the cakes is forcedly suppressed.

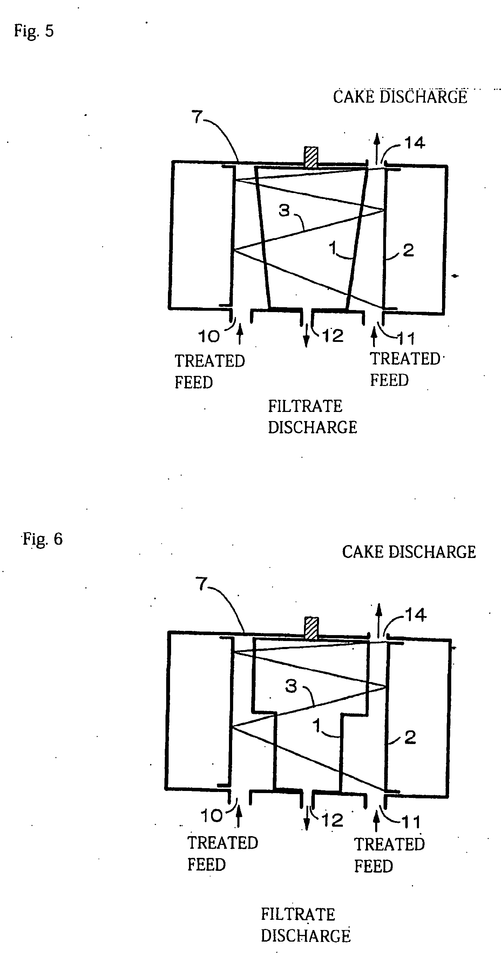

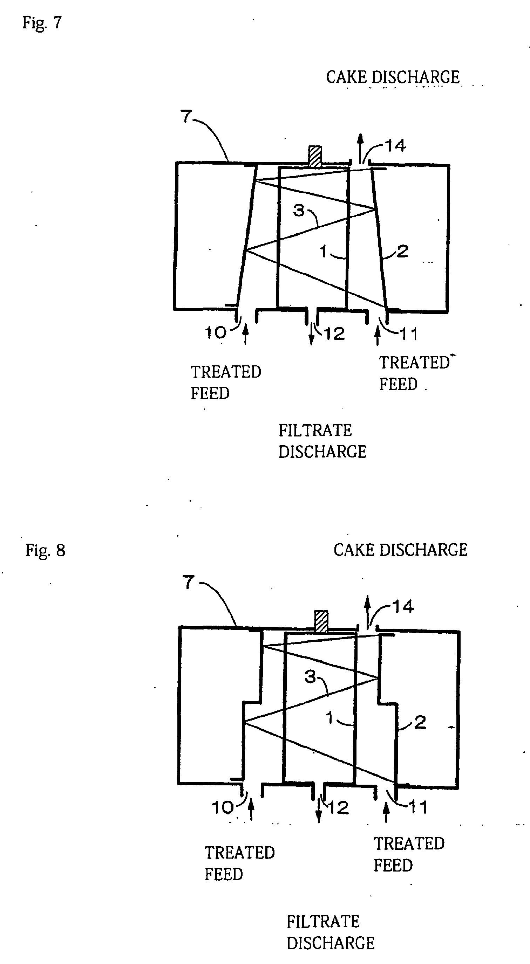

The filtering room 4 is formed in the ring shape having the same cross section area in the vertical direction. Preferably the lower portion of the filtering room 4 has a large-capacity filtering volume to secure the throughput while the difference in radius between the inner and outer screens 1 and 2 is narrowed to enhance the dewater efficiency in the upper portion of the filtering room 4. Specifically, as shown in Fig. 5, while the shape of the outer screen 2 is not changed, the inner screen 1 is continuously enlarged in the radial direction toward the cake discharge 14 from the treated feed inlet ports 10 and 11 (substantially conical shape). Alternatively, as shown in Fig. 6, while the shape of the outer screen 2 is not changed, the inner screen 1 is enlarged in a step manner toward the cake discharge 14 from the treated feed inlet ports 10 and 11 (multi-stage cylindrical shape). Alternatively, as shown in Fig. 7, while the shape of the inner screen 1 is not changed, the outer screen 2 is continuously decreased in the radial direction toward the cake discharge 14 from the treated feed inlet ports 10 and 11. Alternatively, as shown in Fig. 8, while the shape of the inner screen 1 is not changed, the outer screen 2 is decreased in a step manner toward the cake discharge 14 from the treated feed inlet ports 10 and 11.

As shown in Figs. 1 and 2, an inner washing pipe 8 is extended along the inner circumferential surface of the inner screen 1, and plural washing nozzles 8A, 8A, ... are attached to the inner washing pipe 8 so as to face the inner circumferential surface of the inner screen 1. Similarly, an outer washing pipe 9 is extended along the outer circumferential surface of the outer screen 2, and plural washing nozzles 9A, 9A, ... are attached to the outer washing pipe 9 so as to face the outer circumferential surface of the outer screen 2. Washing water is sprayed from the plural washing nozzles 8A, 8A, ... and 9A, 9A, ... while the inner screen 1 and the outer screen 2 are rotated about the shaft, thereby washing the clogged filter medias of the inner screen 1 and outer screen 2. The washing water sprayed during the washing is reserved as waste water of washing along with the filtrate on the bottom plate 7B located in the inner screen 1 and the bottom plate 7B located between the casing 7 and the outer screen 2. Finally, the waste water of washing and the filtrate are discharged from the filtrate discharge nozzles 12 and 13.

The high-pressure washing water is sprayed to the inner and outer screens 1 and 2 to perform the washing, and preferably alkaline chemical is sprayed as the washing water to perform the washing. Preferably, ultrasonic transmitters are provided at the filter medias of the inner and outer screens 1 and 2. Then, the screens are washed and vibrated to improve the washing power.

The arrangement of the inner and outer washing pipes 8 and 9 and washing nozzles 8A and 9A is not limited to the above mentioned arrangement. For example, the inner and outer washing pipes are installed in the filtering room 4, and a washing nozzle (not shown) is attached to the fixed wall 3 or the like to spray the washing water from an inside of the filtering room 4. The inner and outer washing pipes 8 and 9 may be placed at plural points.

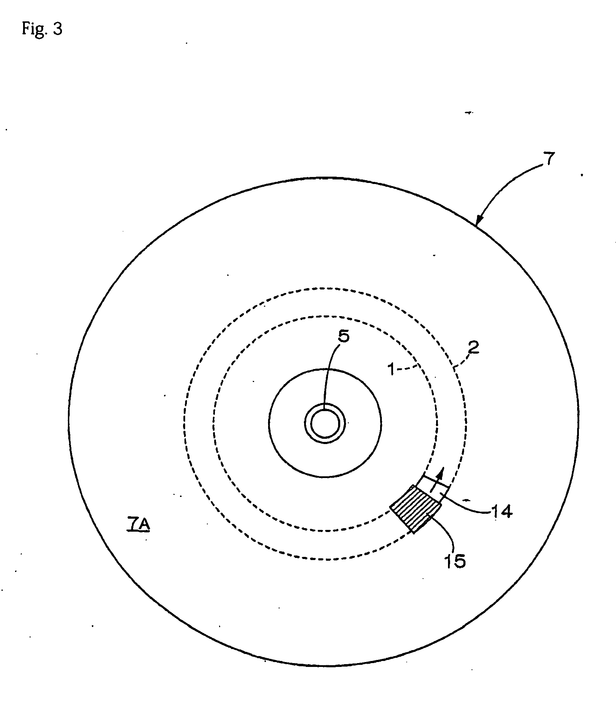

As shown in Fig. 3, in the upper plate 7A of the casing 7, the cake discharge 14 is formed in a portion to which the filtering room 4 is projected, and the dewatered cakes are discharged from the cake discharge 14. The back pressure plate 15 is attached to the cake discharge 14. A discharge resistance is generated to adjust the amount of discharged sludge by the back pressure plate 15, thereby achieving the further squeezed cake, the decreased moisture content, and the reduced volume.

### (Filtering Method)

A filtering method in which the previous filtering apparatus is used will be described below.
First, the treated feed is pressure fed to the treated feed inlet ports 10 and 11 with a pump, and the treated feed is fed into the filtering room 4. While thus treated liquid fed into the filtering room 4 is raised in the spiral manner along the fixed wall 3, two-media filtering is performed by the inner screen 1 and the outer screen 2. The inner screen 1 and the outer screen 2 are rotated by first and second rotating means (not shown) such as motors, respectively. At this point, the inner screen 1 and the outer screen 2 are rotated in the same direction with the difference in rotating speed if needed. It is not always necessary to rotate both the inner screen 1 and the outer screen 2, but it is only necessary to rotate one of these screens.

While the treated liquid is raised along the fixed wall 3 by the pressure of pump pressure feed and the friction of the rotation, the solid/liquid separation is performed in the lower portion of the filtering room 4 formed between the inner screen 1 and the outer screen 2 so that the squeezing and dewater are performed in the upper portion of the filtering room 4. Finally, the dewatered cake is discharged from the cake discharge 14.

The cakes having the high moisture contents, after the solid/liquid separation, are raised in the upper portion of the filtering room 4, and the squeezing of the cakes is promoted by the rotation friction between the inner screen 1 and the outer screen 2 and the discharge resistance of the back pressure plate 15. As a result, the moisture contents of the cakes are decreased and the volumes of the cakes are reduced. Then, the cakes are discharged from the cake discharge 14.

In the first arrangement, the treated liquid is fed from one or two points. When the treated liquid is fed through the one or two treated feed inlet ports, a dry solid content distribution and a differential pressure of filtering distribution are generated in a treated liquid transfer direction in a duct, and filtering and thickening performance is possibly decreased at a place far away from the inlet port.
Additionally, a charging pressure higher than the differential pressure of filtering is required to ensure the fluidity in the duct depending on a viscosity of the treated feed, and the solids possibly flow out from the filter to decrease a recovery rate due to the application of the excessive pressure.
Therefore, in a second arrangement, the number of treated feed inlet ports is increased to improve the filtering and thickening performance and the suspending solid recovery rate.

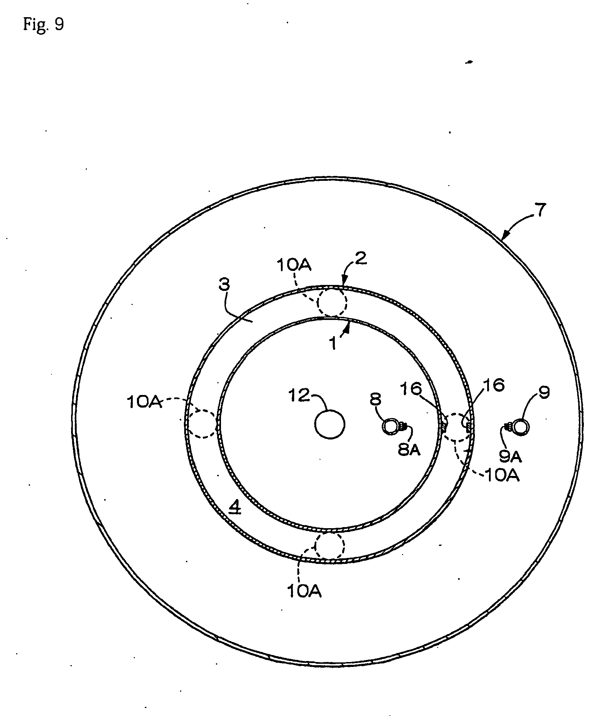

As shown in Fig. 9, in the bottom plate 7B of the casing 7, treated feed inlet ports 10A, 10A, ... are formed in the portion to which the filtering room 4 is projected, and the treated feed is fed from the treated feed inlet ports 10A, 10A, .... The formation of the plural treated feed inlet ports can unify concentration and pressure distributions of thus treated liquid immediately after the treated feed is input to the filtering room 4, and the filtering and thickening performance is enhanced in the lower portion of the filtering room 4 in which the filtering and thickening are mainly performed by the solid/liquid separation action. When compared to the case in which the treated feed inlet ports are formed at one or two points, the application of the excessive pressure in consideration of the pressure loss is not required by forming the treated solution inlet ports at three points or more As a consequence, the solids can be prevented from flowing out from the filter to achieve the improvement of the suspending solid recovery rate (%) and an unnecessary burden is not applied to the filtering apparatus. Additionally, the duct length through which the treated liquid is transferred can substantially be shortened to decrease the pressure loss, which contributes to the improvement of the suspending solid recovery rate (%).

In this second arrangement, there are, but not limited to, the four treated feed inlet ports 10A, 10A, ... and it is only necessary that the treated feed inlet ports 10A, 10A, ... may be formed at plural points (preferably at least three points, more preferably at least four points).

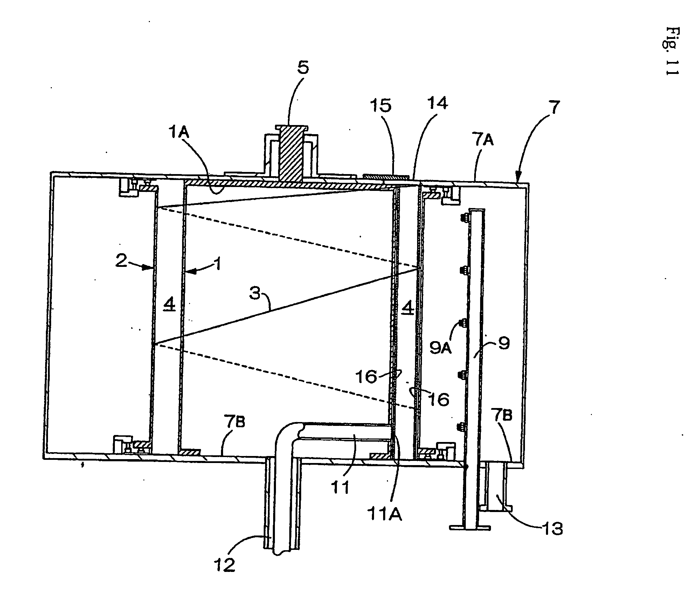

A mode shown in Fig. 11 can be proposed as another mode of the treated feed inlet port. In the mode of Fig. 11, a treated liquid feed pipe 11 is coupled to a central portion of the casing 7, and a front-end portion of the treated liquid feed pipe 11 pierces through the side face of the inner screen 1 to form a treated feed inlet port 11A. The treated liquid feed pipe 11 is configured to be rotated in synchronization with the rotation of the inner screen 1, and the treated feed is fed into the filtering room 4 through the treated feed inlet port 11A formed in the side face of the inner screen 1 while the port 11A is also rotated. The treated feed is fed into the filtering room 4 through the treated feed inlet port 11A formed in the side face of the inner screen 1 while the port 11A is rotated in the circumferential direction. Thus treated liquid is easily stirred in the filtering room 4, and the concentration and pressure distributions of the treated liquid can further be unified. There is, but not limited to, one treated feed inlet port 11A in Fig. 11, and the treated feed inlet ports 11A may be attached to the plural points. In the treated liquid, the filtrate, after the solid/liquid separation, is partly discharged from the filtrate discharge nozzle 12 formed in the bottom plate 7B of the casing 7 as shown in Fig. 11. Although the inner washing pipe 8 is not shown in Fig. 11 for the sake of convenience, obviously the inner washing pipe 8 may be attached.

The treated feed inlet port 11A may be formed in not only the side face of the inner screen 1 but also a side face (not shown) of the outer screen 2, further the treated feed inlet ports 11A may be formed in the side faces of the inner screen 1 and outer screen 2, respectively.

As shown in Fig. 10, in the lower portion of the filtering room 4, i.e., in the neighborhood of the treated feed inlet ports 10A, 10A, ..., the lower portion of the fixed wall 3 is provided while separated from the bottom plate 7B of the casing 7 (the lower portion of the spiral fixed wall 3 may be cut), and a ring-shaped space (store space 17) surrounded by the inner screen 1 and the outer screen 2 can be formed. The store space 17 acts as a space for reserving the treated liquid. The evenness of the concentration and pressure distributions of the treated liquid can be promoted by the configuration in which the treated feed is fed into the store space 17 from the treated feed inlet ports 10A, 10A, ... formed at plural points. Particularly, the evenness of the concentration and pressure distributions can further be promoted by adopting the store space 17 in conjunction with the treated feed inlet port 11A having the mode shown in Fig. 11. In such cases, the fixed wall 3 can be fixed to the bottomplate 7B of the casing 7 while arbitrary couplingmaterials (support rods) such as rods 18 and 18 are interposed.

Because other configurations of the second arrangement are similar to those of the first arrangement, the detailed description is not repeated. Because the filtering method in which the filtering apparatus of the second arrangement is used is also similar to that of the first arrangement, the detailed description is not repeated.

### <First Embodiment>

Because the excessive stress is applied to the spiral fixed wall described in the first arrangement from the moving treated liquid or cake, the fixed wall needs the improvement of the strength and the maintenance of the shape.
In a first embodiment, the improvements of the strength and the maintenance of the shape are achieved to stably perform the filtering work.

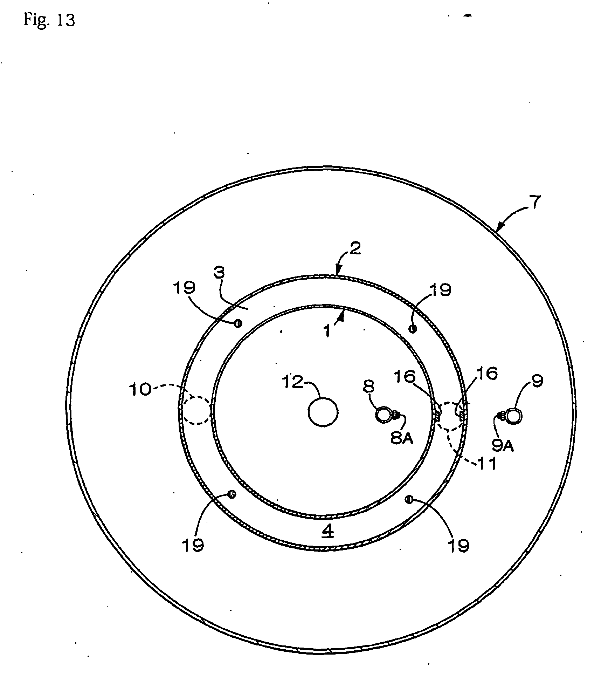

As shown in Figs. 12 and 13, the fixed wall 3 is formed in the spiral (ribbonscrew) shape, and the fixed wall 3 is provided in the ring-shaped filtering room 4 formed between the inner screen 1 and the outer screen 2. In the first embodiment, the fixed wall 3 is attached to support rods 19 while fixed to the upper plate 7A and bottom plate 7B of the casing 7, whereby the fixed wall 3 is not rotated about the shaft center.

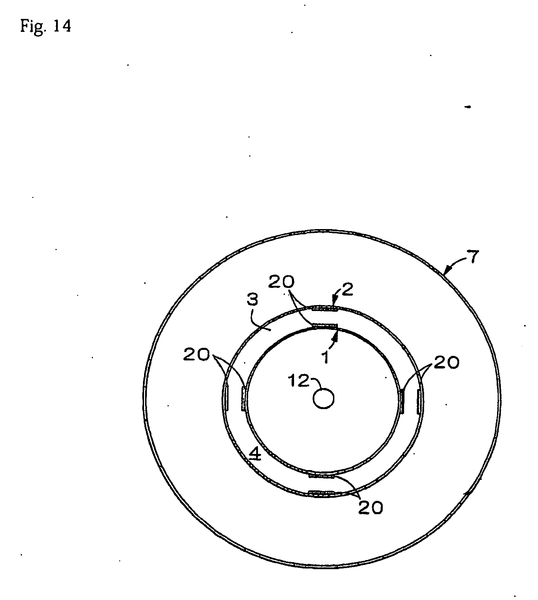

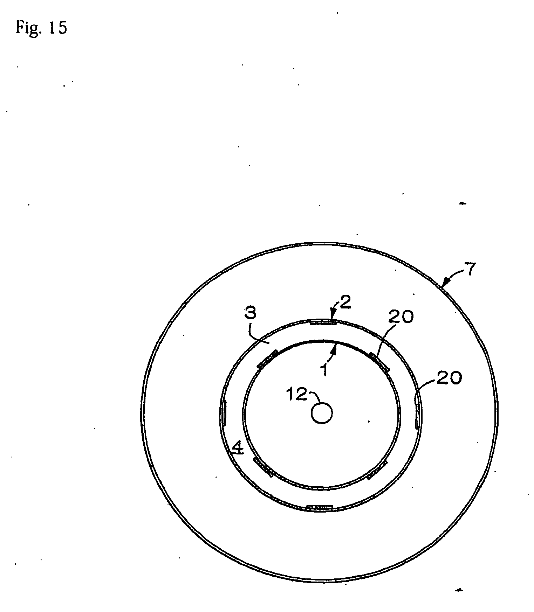

During the transfer, the stress is applied to the fixed wall 3 from the moving treated liquid or cake. In the first embodiment, the support materials (rods) 19 are attached to a substantially central portion of the spiral fixed wall 3 as shown in Figs. 12 and 13 in order to enhance the mechanical strength of the spiral fixed wall 3 to which the stress is applied, thereby to maintain the shape of the spiral fixed wall 3. End portions of the support rod 19 are fixed to the upper plate 7A and/or bottom plate 7B of the casing 7, and the fixed wall 3 is supported by the support rods 19. Therefore, the improvement of the strength and maintenance of the shape are ensured to stably perform the filtering work and to enhance the dewater performance. The support rods 19 shown in Figs. 12 and 13 are regularly attached to the fixed wall 3 at, but not limited to, four points so as to continue the substantially central portion of the spiral fixed wall 3. It is only necessary that at least one support rod 19 is attached to the fixed wall 3. The support rod 19 is formed in not only the rod shape but also a flat bar shape. The arrangement of the support rods 19 shown in Figs. 12 and 13 is excellent in efficiency and cost from the viewpoint of the strength maintenance compared with the arrangement of a support material 20 explained below and shown in Figs. 14 and 15.

Instead of the arrangement mode of the support rods 19 shown in Figs. 12 and 13, arrangement modes of support materials 20 shown in Figs. 14 and 15 can be proposed. Also in these proposed cases, end portions of each support material 20 are fixed to the upper plate 7A and bottom plate 7B of the casing 7. Then, the spiral fixed wall 3 is supported at its end portions in its width direction by the support materials 20. Further, each support material 20 is brought close to or into contact with the inner screen 1 or outer screen 2. The inner and outer washing pipes 8 and 9 are provided, although not shown in Figs. 14 and 15.

In the arrangement mode of the support materials 20 shown in Fig. 14, the pair of support materials 20 and 20 clamp the end portions of the fixed wall 3 from the inner screen side and the outer screen side. There are, but not limited to, four sets of two support materials 20 and 20 in the mode shown in Fig. 14. It is only necessary that at least one set of support materials 20 and 20 may be formed. In this arrangement mode, the support materials 20 are disposed so as to clamp the end portions of the fixed wall 3, causing transfer resistance against the treated liquid or cake. Therefore, when the arrangement mode is particularly adopted in the lower portion of the filtering room 4 where the large amount of treated liquid exists which has fluidity with low dry solid content, the consolidation degree of the treated liquid can be improved due to the transfer resistance whereby the dewater performance can be improved.

In the arrangement mode of the support materials 20 shown in Fig. 15, unlike the arrangement mode shown in Fig. 14, the support materials 20 are alternately arranged so as not to face each other on the inner screen side and the outer screen side for supporting the end portions of the fixed wall 3. In the mode shown in Fig. 15, there are, but not limited to, four support materials 20 in the inner circumference and outer circumference, respectively. It is only necessary that at least one support material 20 may be formed in each circumference. In this arrangement mode, similarly to the arrangement mode shown in Fig. 14, the transfer resistance is caused against the treated liquid or cake. However, because the support materials 20 are alternately arranged, the transfer resistance becomes smaller than that of the arrangement mode shown in Fig. 14. Therefore, when the arrangement mode is particularly adopted in the upper portion of the filtering room 4 where the large amount of cake exists whose moisture content is decreased, the transfer resistance can be decreased to easily perform the transfer.

The arrangement modes of the support materials 20 shown in Figs. 14 to 15 can appropriately be combined. For example, the arrangement mode of the support materials 20 shown in Fig. 14 is used in the lower portion of the filtering room 4 and the arrangement mode of the support materials 20 shown in Fig. 15 is used in the upper portion of the filtering room 4. Although the support materials 20 shown in Figs. 14 and 15 are formed in the flat bar shape, the support materials 20 may be formed in the rod shape.

As to the attachment of the scraper 16 in the arrangement mode of the support materials 20 shown in Figs. 14 and 15, although not shown, the scraper 16 may be attached to the inner screen side of the support material 20 so as to be brought close to or into contact with the inner screen 1, or the scraper 16 may be provided not at the support material 20 but separately at the end portion of the fixed wall 3. The support materials 20 shown in Figs. 14 and 15 are arranged so as to be brought close to or into contact with the inner screens 1 and 2, whereby the support materials 20 may have the scraper function. The support material 20 is also used as the scraper, so that the number of components can be decreased to reduce the production cost.

Although not shown, similarly to the first_and second arrangements, the stirring and mixing of the cake can be promoted by making the holes through which the cakes can pass in part of the spiral fixed wall 3. In the lower portion of the filtering room 4, i.e., in the neighborhoods of the treated feed inlet ports 10 and 11, the lower portion of the fixed wall 3 may be provided while separated from the bottom plate 7B of the casing 7 (the lower portion of the spiral fixed wall 3 may be cut). In this case, the fixed wall 3 is fixed to the bottom plate 7B of the casing 7 while the support rod 19 is interposed therebetween.

Because other configurations of the first embodiment are similar to those of the first and second arrangements the detailed description is not repeated. The filtering method in which the filtering apparatus of the first embodiment of this invention is used is similar to that of the first and second arrangements; therefore, the detailed description is not repeated.

For the filters described in the first arrangement, it is further required to improve the filtering and thickening performance, the consolidation and dewater performance, and the suspending solid recovery rate. Also demanded is the improvement of the transfer property of the cake whose moisture content is decreased.
Therefore, in a third arrangement, the improvement of the transfer property of the cake is achieved while achieving the improvements of the filtering and thickening performance, the consolidation and dewater performance, and the suspending solid recovery rate.

As described in the first arrangement, the filter used in the inner screen 1 or outer screen 2 is not limited to the wedge wires, but a punched metal (not shown), a metal mesh (not shown), filter cloth (not shown), and the like can be used as the filter. Examples of available punched metal include a slit grill, a diagonal screen, a luster metal, a round hole, a slit herringbone square hole used for the dewater, separation, thickening, and classification of the solids.

Although not shown, a punched metal used as a filter of the inner screen 1 and/or outer screen 2 is used as follows. The punched metal whose pores have the larger diameters (opening) is used in the lower portion of the filtering room 4 where the large amount of treated liquid exists which has fluidity with low dry solid content, because the filtering and thickening are mainly performed in the lower portion of the filtering room 4. On the other hand, the punched metal whose pores have the smaller diameters is used in the upper portion of the filtering room 4 where the large amount of cake exists whose moisture content is decreased, because the consolidation and dewater are mainly performed. Therefore, the diameters of the pores are gradually decreased toward the upper portion from the lower portion of the filtering room 4 as a whole. In this connection, when the diameters of the pores are decreased in the upper portion of the filtering room 4, the high pressure is generated on the cake discharge side. For this reason, the cakes hardly flow out from the filter to improve the suspending solid recovery rate (%)

In a modification of the third arrangement the pores having the same diameter are made in the lower and upper portions of the filtering room 4 while an opening ratio is gradually decreased toward the upper portion from the lower portion of the filtering room 4.

The aforementioned configuration is used for the punched metal. However, not being limited to this, such configuration also can be used for the opening in wedge wires or the like.

Although not shown, a filter to which hi-friction surface-treatment is performed can be used as the filter of the inner screen 1 and/or outer screen 2. The cake and the treated liquid are transferred in the circumferential directions of the inner and outer screens 1 and 2 by the friction of the rotating screens, and the cake and the treated liquid interfere with the fixed wall 3. Therefore, the cake and the treated liquid are moved toward the axial direction while rotated about the shaft, and finally the cake is discharged from the cake discharge 14. Accordingly, the transfer property of the cake and the treated liquid can be improved by performing the hi-friction surface-treatment to the filter. The hi-friction surface-treatment shall mean that a material having high frictional resistance (friction coefficient) is used, working such as irregular surface treatment is performed to obtain the high frictional resistance, or a material subjected to such working is attached to the surface of the filter. The punched metal obtained by forming the irregularity in the surface of the diagonal screen or slit grid can be considered as the hi-friction surface-treatment. A contact area with the cake or treated liquid is increased by the irregularity of the surface, and the filter has the large frictional resistance, which improves the transfer property of the cake and treated liquid.

Particularly, the filter subjected to at least the hi-friction surface-treatment is used in the upper portion of the filtering room 4 where the large amount of cake exists whose moisture content is decreased, whereby the frictional force with the filter is increased so that the cake and treated solution are transferred easily. Additionally, the stirring efficiency can be improved when such filter is used in the lower portion of the filtering room 4 where the large amount of treated liquid exists which has fluidity with low dry solid content.

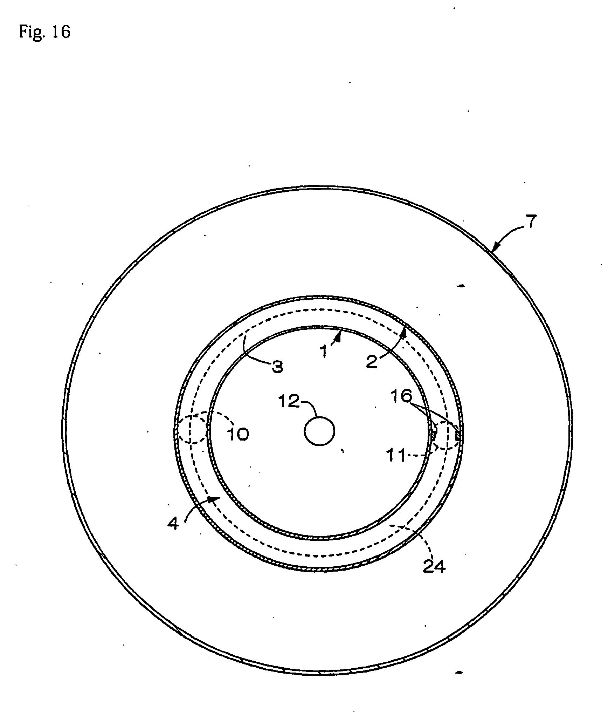

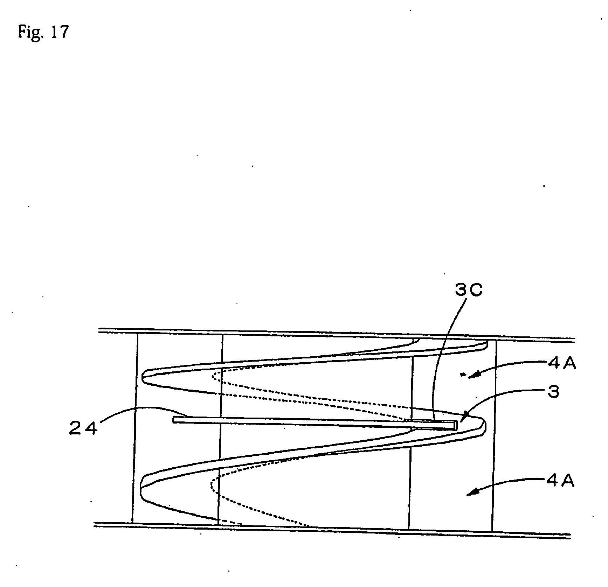

A mode can also be considered in which a support part 24 to transfer is attached to the inner screen 1 to assist the transfer property of the cake or treated liquid as shown in Figs. 16 and 17. The support part 24 to transfer is formed in a doughnut-shaped flat plate. The support part 24 to transfer is rotated in association with the rotation of the inner screen 1, and the support part 24 to transfer assists and promotes the transfer of the cake or treated liquid by the friction generated in bringing the cake or treated liquid into contact with the surface of the support part 24 to transfer. Because the fixed wall 3 is not rotated, it is necessary that a notch 3C be previously formed in a portion where the support part 24 to transfer intersects the fixed wall 3 such that the support part 24 to transfer and the fixed wall 3 do not interfere with each other. Preferably, the hi-friction surface-treatment is performed to the surface of the support part 24 to transfer to increase the friction. The support parts 24 to transfer may be provided at plural points, the support part 24 to transfer may be attached to the outer screen 2 (not shown), or the support parts 24 to transfer may be attached to both the inner screen 1 and the outer screen 2 while vertically shifted from each other. In the third arrangement, the support part 24 to transfer is, but not limited to, the doughnut-shaped flat plate continuously formed on the circumferential surface of the filter. Alternatively, although not shown, the support part to transfer may be discontinuous rod-shaped members. These rod-shaped members may be provided at plural points.

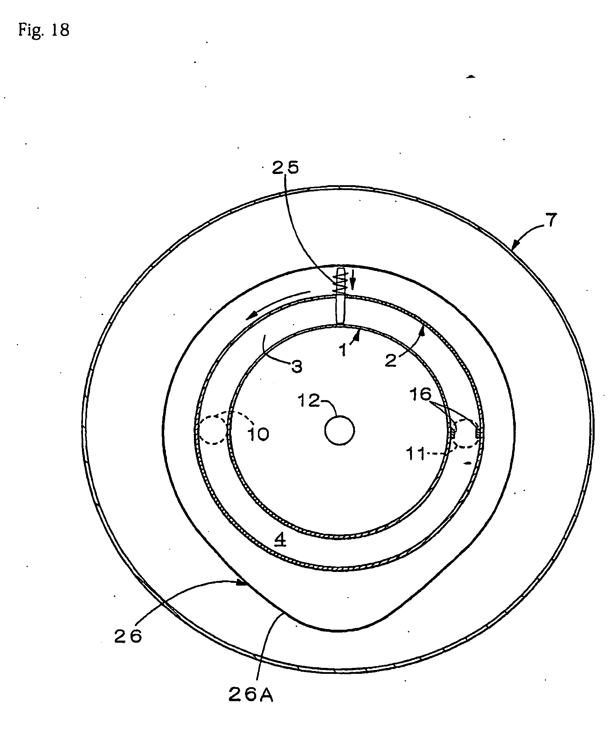

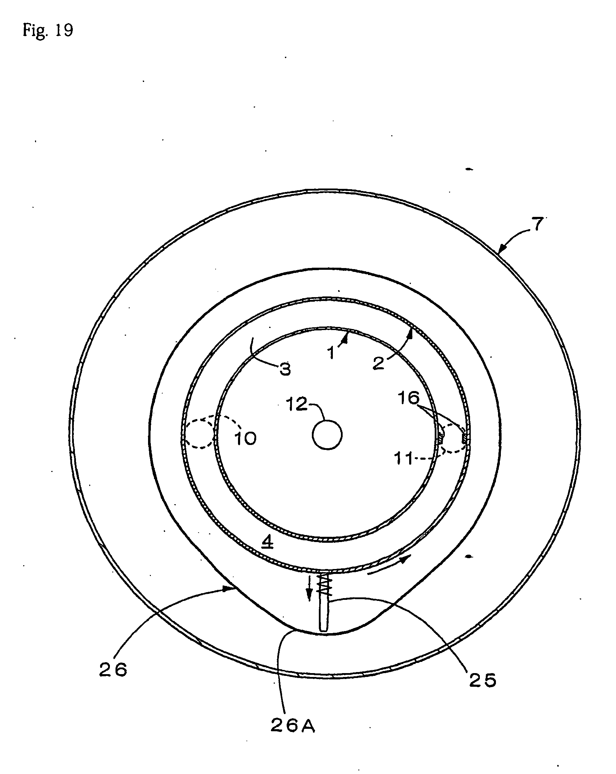

A mode can also be considered in which a rod-shape support part 25 to transfer is attached to the outer screen 2 as shown in Figs. 18 and 19. The support part 25 to transfer assists the transfer of the cake or treated liquid, and the support part 25 to transfer can be expanded in the axial direction so as to avoid the intersection with the fixed wall 3. The support part 25 to transfer is attached to the outer circumference of the outer screen 2 while a compression spring is interposed, and a rear end portion of the support part 25 to transfer is pressed against a circumferential edge of a ring-shaped member 26. The ring-shaped member 26 is provided so as to surround the outer screen 2, and the ring-shaped member 26 abuts on the rear end portion of the support part 25 to transfer to regulate the expansion in the radial direction of the outer screen 2. The support part 25 to transfer can be expanded in the axial direction in order to avoid the contact with the fixed wall 3. As shown in Fig. 19, in the portion where the support part 25 to transfer intersects the fixed wall 3, a concave portion 26A is formed in the circumferential edge of the ring-shaped member 26 such that the support part 2 to transfer does not contact to the fixed wall 3.

The support parts 25 to transfer may be provided at plural points. Although not shown, the ring-shaped member 26 regulating the support part 25 to transfer may be attached to the inside of the inner screen 1 while the support part 25 to transfer is attached to the inner screen 1.

In the mode shown in Figs. 16 and 17 and the mode shown in Figs. 18 and 19, the transfer property of the cake is improved by particularly using the modes at least in the upper portion of the filtering room 4 where the large amount of cake exists whose moisture content is decreased.

Because other configurations of the third arrangement are similar to those of the previous arrangements, and embodiments, the detailed description is not repeated. The filtering method in which the filtering apparatus of this arrangement is used is also similar to that of the previous arrangements and embodiments, the detailed description is not repeated.

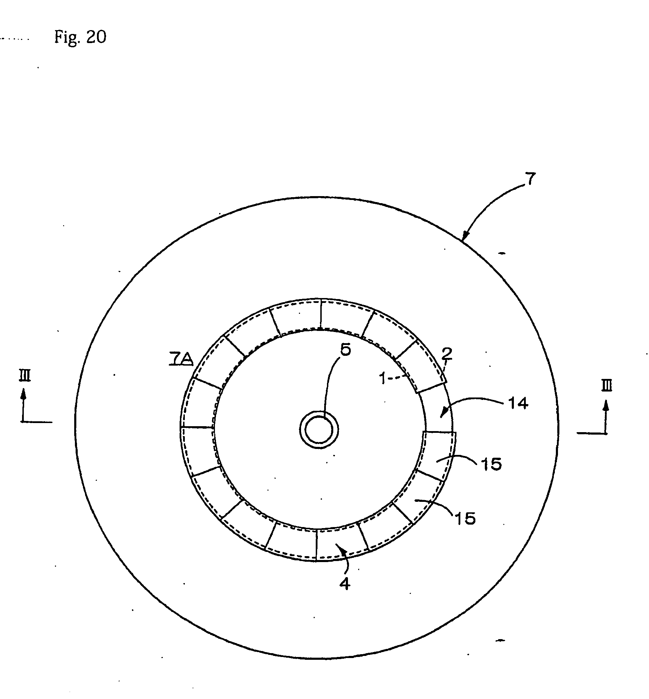

In the first arrangement, there is a room for the improvement of the consolidation of the cake or the decrease in moisture content at the cake discharge. Therefore, in a fourth arrangement, the cake is consolidated to promote dewatering, and adjustment of the consolidation degree is achieved.
As shown in Figs. 20 to 22, in the fourth arrangement, the cake discharge 14 in the upper plate 7A of the casing 7 is circularly formed in the substantially whole range of the portion to which the filtering room 4 is projected. Plural back pressure plates 15, 15, ... are provided such that the cake discharge 14 is covered therewith. These back pressure plates 15, 15, ... are detachably attached to the cake discharge 14, and the back pressure plates 15, 15, ... are fixed to the upper plate 7A of the casing 7 by, e.g., bolts. It is not always necessary that the cake discharge 14 be formed in the whole range of the portion to which the filtering room 4 is projected, but the cake discharge 14 may be formed in the part of such portion.

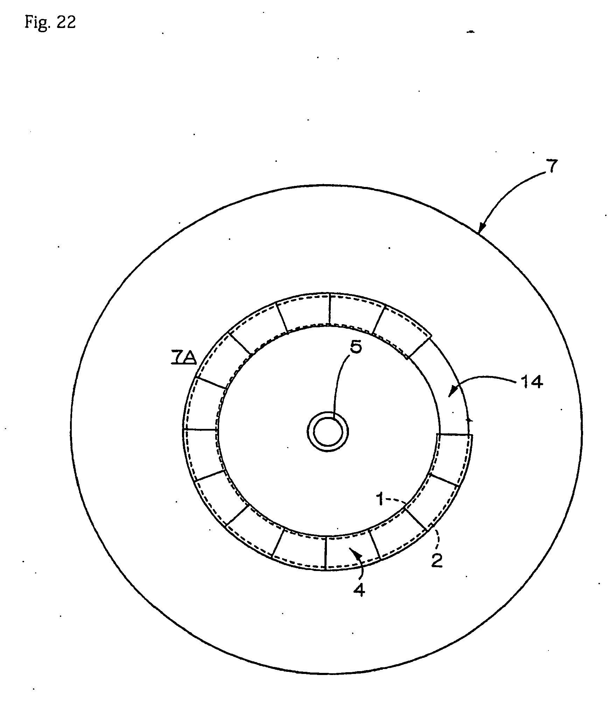

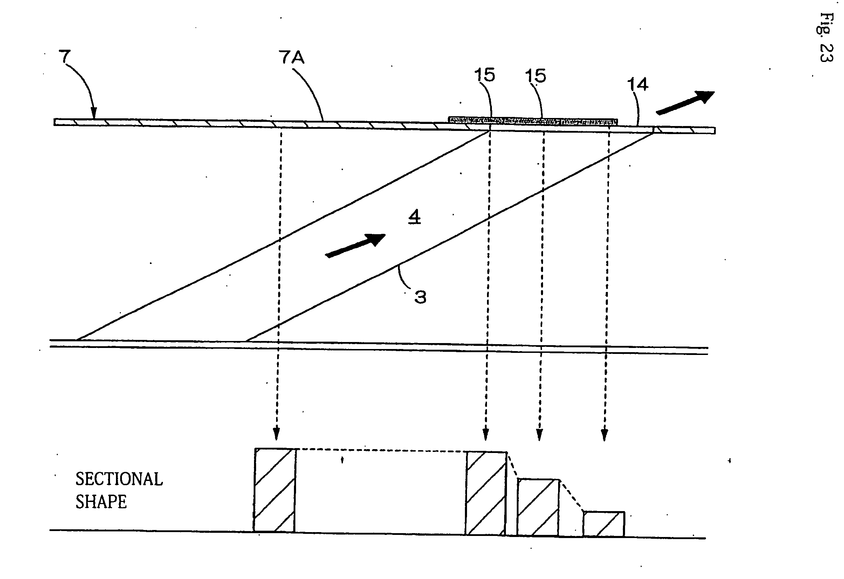

As shown in Fig. 23, the cake is moved to the upper portion of the filtering room 4 along the spiral (ribbon screw-shaped) fixed wall 3. Because the plural back pressure plates 15, 15, ... are located in the uppermost portion, a cross section area (longitudinally cross section area of the portion surrounded by the fixed wall 3, the back pressure plate 15, the inner screen 1, and the outer screen 2) of the cake moving space is decreased as the cake is moved upward. Therefore, as shown in Fig. 22, the sectional area can be changed by detachably attaching the back pressure plates 15, 15, ... as appropriate, and a squeezing force (discharge resistance) applied to the cake and the discharge amount can be adjusted depending on content of the cake or running state.

In the dewater of the cake in the filtering room 4, by the rotations of the inner screen 1 and outer screen 2, the squeezing force is applied to the cake while the cake revolves around along the spiral (ribbon screw-shaped) fixed wall 3. Additionally, because the cake near the cake discharge 14 is squeezed also in the axial direction by the back pressure plates 15, 15, ..., the cake is squeezed in different directions of the radial direction and the axial direction in the uppermost portion of the filtering room 4. Therefore, the moisture content of the cake can effectively be decreased.

The cake taken out from the cake discharge 14 is discharged from the end portion of the upper plate 7A of the casing 7 while revolving around by the inertia force (push-out) generated by the rotation of the inner screen 1 or outer screen 2. Then, the cake is delivered to a machine to transfer dewatered cake (not shown) for the next treatment process.

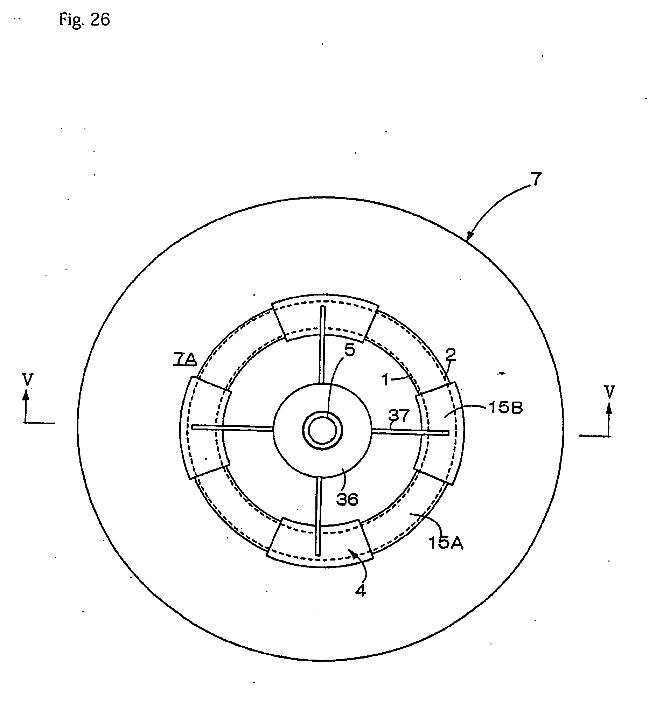

As shown in Figs. 26 to 28, in another arrangement, the back pressure plate 15 may be divided into a fixed portion and a movable portion. In Fig. 26, fixed back pressure plates 15A and movable back pressure plates 15B are alternately provided in the circular shape. The movable back pressure plates 15B are attached to arms 37 extended from a rotational hub 36. Because the movable back pressure plate 15B can be slid in the circumferential direction on the fixed back pressure plates 15A, a size of the cake discharge 14 can be adjusted by the rotation of the hub 36. Therefore, the squeezing force (discharge resistance) applied to the cake and the discharge amount can finely be adjusted depending on the running state and the like. In the mode of Fig. 26, the cakes can be discharged from plural points.

The hub 36 is provided concentric with the inner cylinder rotating shaft 5, and the hub 36 can manually be moved or hub 36 can be moved by a driving source (not shown) such as a motor. In the case where the hub 36 is moved by the driving source, the opening and closing of the movable back pressure plate can automatically be controlled on the basis of the running state. The first rotating means or second rotating means for rotating the inner screen 1 or outer screen 2 may be used as the driving source, or another driving source may be used.

It is not always necessary to provide the fixed back pressure plate 15A. When the plate 15A is not provided, the upper plate 7A of the casing 7 may be extended.

Thus, the back pressure plate is configured to be able to adjust the cross section area in the cake moving space of the cake discharge, which allows the squeezing force (discharge resistance) applied to the cake and the discharge amount to be adjusted depending on, for example, content of the cake or running state. In addition to the above arrangement, any configuration in which the cross section area of the cake discharge is adjusted may be used.

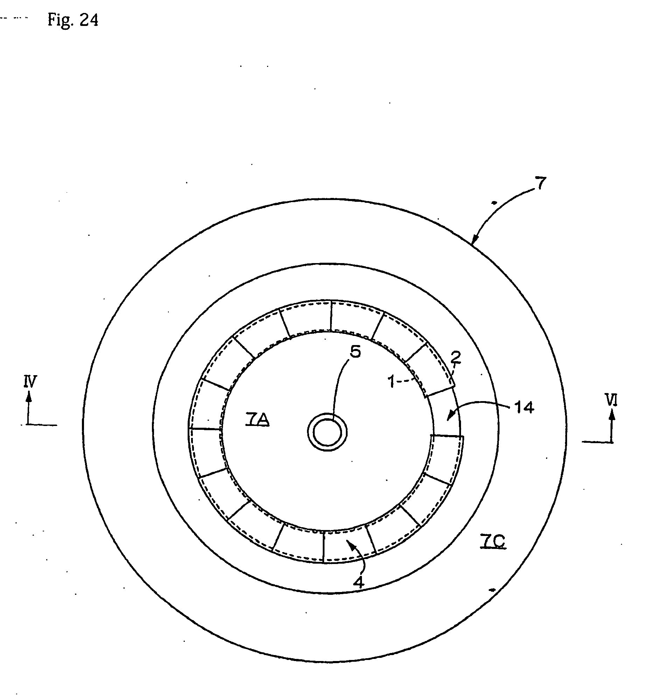

Various means can be considered as the method for transferring the cake taken out from the cake discharge 14 to the outside of the casing 7. For example, as shown in Figs. 24, 25, 29 and 30, a downwardly-inclined surface 7C is formed in the casing 7, and the cake may be discharged to the outside. Although not shown, a gradient inclined downward in the radial direction is provided in the upper plate 7A in a range from the shaft center of the casing 7 to the circumferential portion, which allows the cake to be more securely discharged to the outside.

The cake discharge 14 and a machine to transfer the dewatered cake may directly be connected by an enclosed duct (not shown). In this case, because the complete enclosure is achieved, odor can be suppressed and a sealing structure can be simplified.

A screw conveyer (not shown) is attached to the cake discharge 14, and the cake can be forcedly discharged by the screw conveyer. In this case, because the complete discharge can be achieved, the cleaning is easily performed and the problems such as corrosion caused by the residual cake can be reduced.

A scraping blade (not shown) is placed near the cake discharge 14 and the cake may be transferred to the end of the upper plate 7A of the casing 7 by a propulsion force. The first rotating means or second rotating means for rotating the inner screen 1 or outer screen 2 may be used as the driving source for driving the blade, or another driving source may be used.

In the case where the shaft center of the apparatus is transversely disposed to transversely situate the whole of the apparatus, means for transferring the cake to the outside of the casing 7 can appropriately be selected.

Because other configurations of the fourth arrangement are similar to those of the previous arrangements and embodiments the detailed description is not repeated.

In the fourth arrangement, the cake taken out from the cake discharge 14 is discharged from the end portion of the upper plate 7A of the casing 7 while the cake is revolving around by the inertia force (push-out) generated by the rotation of the inner screen 1 or outer screen 2, or the cake is finally discharged from the filtering apparatus using various means for transferring the cake to the outside of the casing 7 (for example, inclined surface 7C formed downward in the casing 7). Because other configurations of the fourth arrangement are similar to those of the previous arrangements and embodiments, the detailed description is not repeated.

### BRIEF DESCRIPTION OF THE DRAWINGS

Figures 12 to 15 are part of the invention, the others are illustrative.

Fig. 1 is a longitudinal sectional view showing a filtering apparatus according to a first embodiment of the invention.
Fig. 2 is a sectional view (transverse sectional view) taken along a line I-I of Fig. 1.
Fig. 3 is a plan view showing the filtering apparatus of the first embodiment.
Fig. 4 is a schematic view for explaining a relationship between a fixed wall and a scraper.
Fig. 5 is a longitudinal sectional view schematically showing another example of the filtering apparatus.
Fig. 6 is a longitudinal sectional view schematically showing another example of the filtering apparatus.
Fig. 7 is a longitudinal sectional view schematically showing another example of the filtering apparatus.
Fig. 8 is a longitudinal sectional view schematically showing another example of the filtering apparatus.
Fig. 9 is a transverse sectional view showing a filtering apparatus according to a second embodiment of the invention.
Fig. 10 is a schematic view for explaining a store space.
Fig. 11 shows another example of a treated liquid feeding pipe.
Fig. 12 is a longitudinal sectional view showing a filtering apparatus according to a third embodiment of the invention.
Fig. 13 is a sectional view (transverse sectional view) taken along a line II-II of Fig. 12.
Fig. 14 is a transverse sectional view for schematically explaining another arrangement mode of a support material.
Fig. 15 is a transverse sectional view for schematically explaining still another arrangement mode of the support material.
Fig. 16 is a plan view schematically showing a support part to transfer according to a fourth embodiment of the invention.
Fig. 17 shows a part of a front face of the support part to transfer.
Fig. 18 is a plan view schematically showing another example of the support part to transfer (elongated).
Fig. 19 is a plan view schematically showing the support part to transfer (compressed).
Fig. 20 is a plan view showing arrangement of back pressure plates of a filtering apparatus according to a fifth embodiment of the invention.

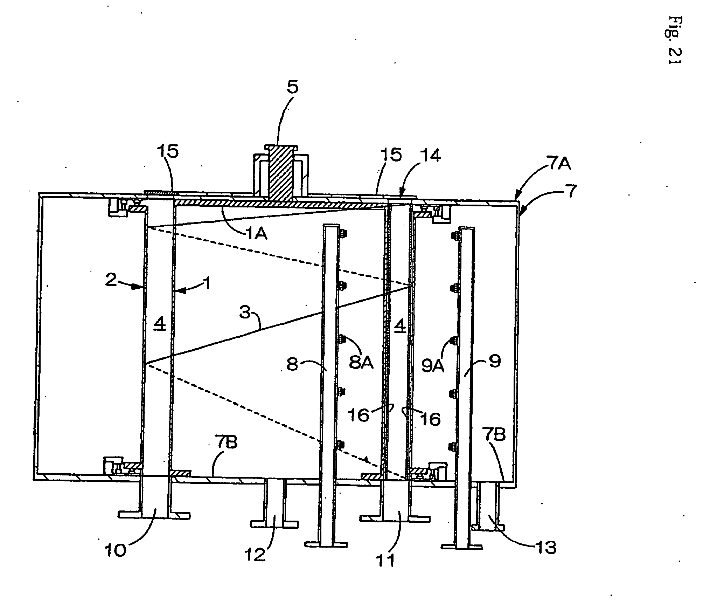

Fig. 21 is a longitudinal sectional view taken along a line III-III of Fig. 20.
Fig. 22 is a plan view showing a state in which part of the back pressure plates is taken out.
Fig. 23 is a schematic view showing a change in cross section area of a cake moving space.
Fig. 24 is a plan view showing another example of the filtering apparatus of the fifth embodiment.

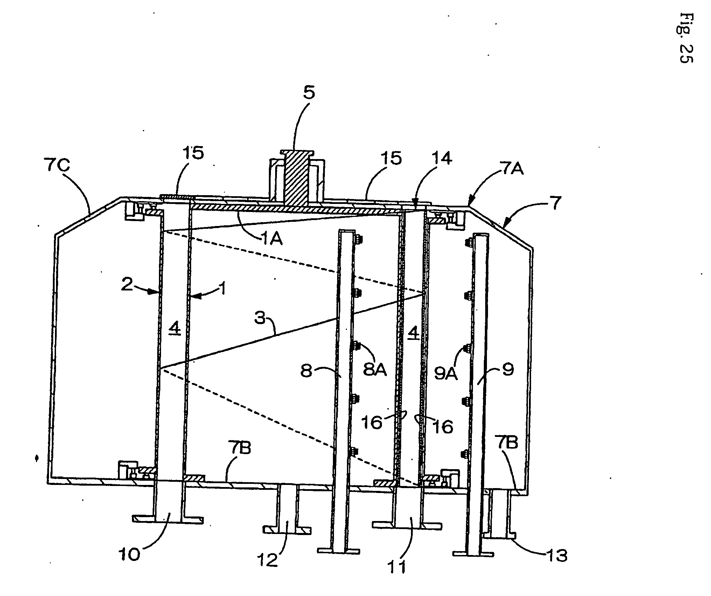

Fig. 25 is a longitudinal sectional view taken along a line IV-IV of Fig. 24.
Fig. 26 is a plan view showing another example of the arrangement of the back pressure plates.

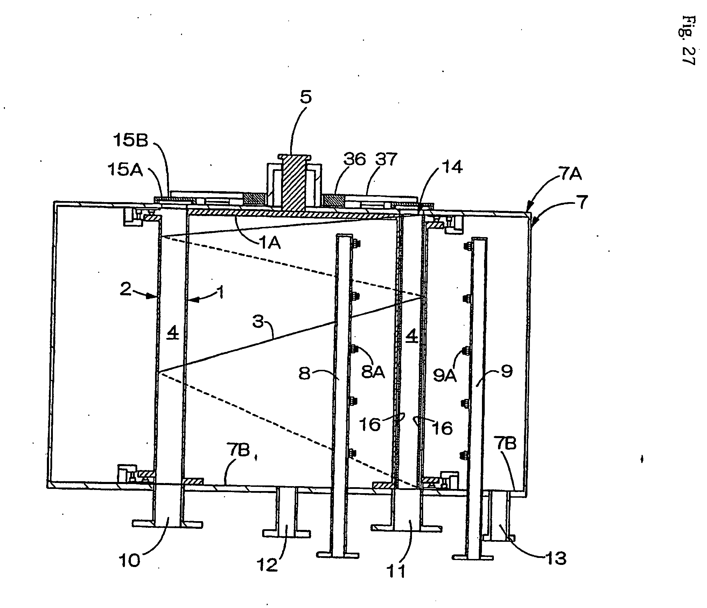

Fig. 27 is a longitudinal sectional view taken along a line V-V of Fig. 26.

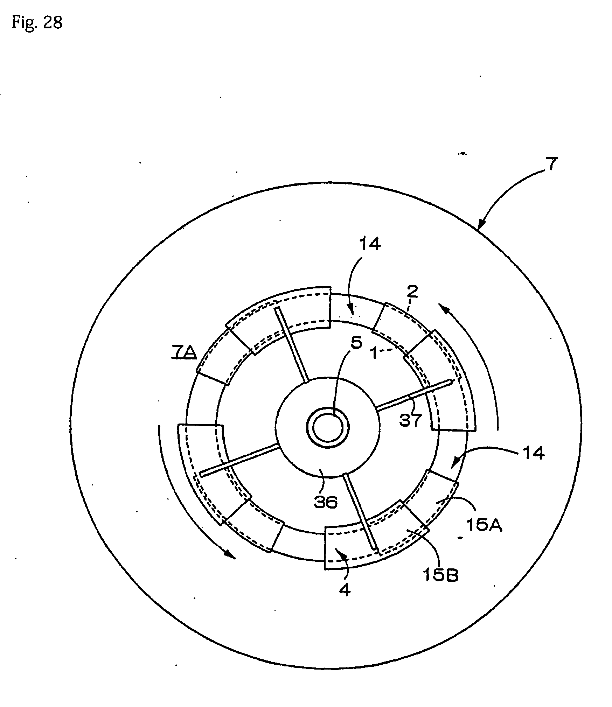

Fig. 28 is a plan view showing a state in which movable back pressure plates are rotated.

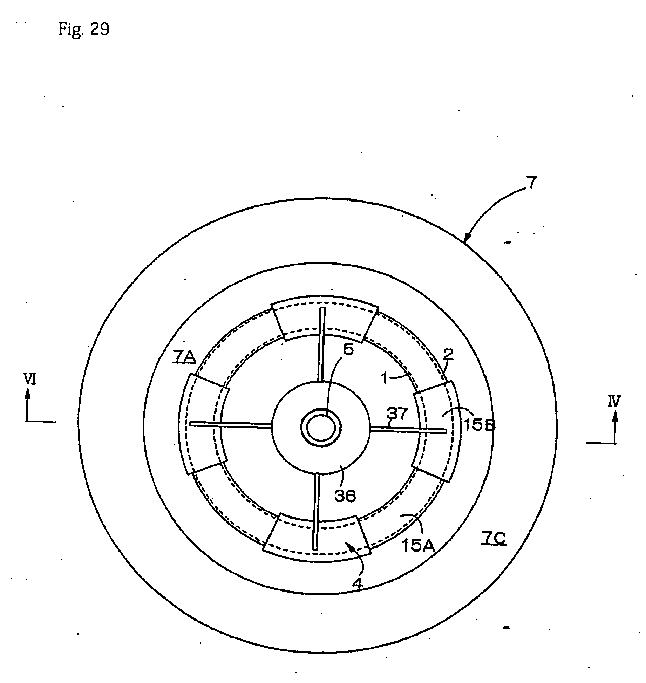

Fig. 29 is a plan view showing another example of the filtering apparatus of the fifth embodiment.

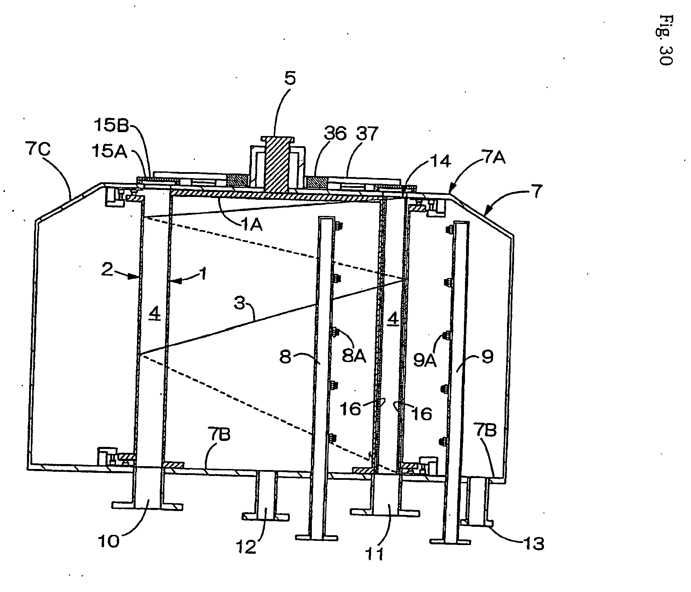

Fig. 30 is a longitudinal sectional view taken along a line VI-VI of Fig. 29.

### EXPLANATIONS OF LETTERS OR NUMERALS

| | |
|---|---|
| 1 | inner screen |
| 1A | upper plate |
| 2 | outer screen |
| 3 | fixed wall |
| 3C | notch |
| 4 | filtering room |
| 5 | inner cylinder rotating shaft |
| 7 | casing |
| 7A | upper plate |
| 7B | bottom plate |
| 7C | inclined surface |
| 8 | inner washing pipe |
| 9 | outer washing pipe |
| 10 | treated feed inlet port |
| 10A | treated feed inlet port |
| 11 | treated feed inlet port |
| 11A | treated feed inlet port |
| 12 | filtrate discharge nozzle |
| 13 | filtrate discharge nozzle |
| 14 | cake discharge |
| 15 | back pressure plate |
| 15A | fixed back pressure plate |
| 15B | movable back pressure plate |
| 16 | scraper |
| 17 | store space |
| 18 | rod |
| 19 | support rod |
| 20 | support material |
| 24 | support part to transfer |
| 25 | support part to transfer |
| 26 | ring-shaped member |
| 36 | hub |
| 37 | arm |

## Claims

1. A filtering apparatus including:
- a cylindrical or conical inner screen (1) and an outer screen (2) which are concentrically disposed; and
- a spiral fixed wall (3) provided in a filtering room (4) between the inner screen (1) and the outer screen (2),
the filtering apparatus allowing for a treated feed to be fed from one end side of the filtering room (4) while a cake is discharged from the other end side of the filtering room (4), and a filtrate is discharged to an outside through the inner screen (1) and the outer screen (2);
wherein the inner screen (1) and/or the outer screen (2) are is rotatable about a shaft center and the spiral fixed wall (3) is not rotatable, and the spiral fixed wall (3) is supported by a support rod (19, 20) fixed to one end and/or the other end of the filtering room (4), wherein the support rod (19, 20) is disposed so as to be brought close to or into contact with the inner screen (1) and/or the outer screen (2), such that the support rod scrapes out the cake adhering to the screens/screen.

2. The filtering apparatus according to claim 1, wherein the inner screen (1) and the outer screen (2) can be rotated with a difference in rotational speed between the inner screen (1) and the outer screen (2).

3. The filtering apparatus according to claims 1 or 2, wherein a pitch of the spiral fixed wall (3) is shortened from the one end side toward the other end side.

4. A filtering method in which a filtering apparatus according to claim 1 is used, the filtering method **characterised by** including:
rotating only the inner screen (1) and/or the outer screen (2) about a shaft center while the spiral fixed wall (3) is not rotated;
in this manipulation process, feeding a treated feed into the filtering room (4) from one end side of the filtering room (4), filtering a treated liquid through the inner screen (1) and the outer screen (2), and discharging each filtrate to an outside; and
discharging a cake from the other end side of the filtering room (4).

## Patentansprüche

1. Filtervorrichtung, die umfasst:
eine zylindrische oder konische innere Trennwand (1) und eine äußere Trennwand (2), die konzentrisch angeordnet sind; und
eine schraubenlinienförmige feste Wand (3), die in einem Filterraum (4) zwischen der inneren Trennwand (1) und der äußeren Trennwand (2) vorgesehen ist,
wobei die Filtervorrichtung ermöglicht, dass ein vorbehandeltes Zufuhrmaterial von einer Stirnseite des Filterraums (4) zugeführt wird, während ein Kuchen aus der anderen Stirnseite des Filterraums (4) ausgestoßen wird, und ein Filtrat zu einer Außenseite durch die innere Trennwand (1) und die äußere Trennwand (2) abgelassen wird;
wobei die innere Trennwand (1) und/oder die äußere Trennwand (2) um ein Wellenzentrum drehbar sind und die schraubenlinienförmige feste Wand (3) nicht drehbar ist, und
die schraubenlinienförmige feste Wand (3) durch eine Stützstange (19, 20) gestützt wird, die an einem Ende und/oder am anderen Ende des Filterraums (4) befestigt ist, wobei die Stützstange (19, 20) angeordnet ist, um in die Nähe oder in Kontakt mit der inneren Trennwand (1) und/oder der äußeren Trennwand (2) gebracht zu werden, so dass die Stützstange den Kuchen, der an den Trennwänden/der Trennwand anhaftet, ausschabt.

2. Filtervorrichtung nach Anspruch 1, wobei die innere Trennwand (1) und die äußere Trennwand (2) mit unterschiedlicher Drehzahl zwischen der inneren Trennwand (1) und der äußeren Trennwand (2) gedreht werden können.

3. Filtervorrichtung nach Anspruch 1 oder 2, wobei ein Abstand der schraubenlinienförmigen festen Wand (3) von der einen Stirnseite zu der anderen Stirnseite verkürzt ist.

4. Filterverfahren, in dem eine Filtervorrichtung nach Anspruch 1 verwendet wird, wobei das Filterverfahren **dadurch gekennzeichnet ist, dass** es enthält:
Drehen nur der inneren Trennwand (1) und/oder der äußeren Trennwand (2) um ein Wellenzentrum, während die schraubenlinienförmige feste Wand (3) nicht gedreht wird;
in diesem Bearbeitungsvorgang Zuführen eines vorbehandelten Zufuhrmaterials zu dem Filterraum (4) von einer Stirnseite des Filterraums (4), Filtern einer vorbehandelten Flüssigkeit durch die innere Trennwand (1) und die äußere Trennwand (2) und Auslassen jedes Filtrats zu einer Außenseite; und Ausstoßen eines Kuchens von der anderen Stirnseite des Filterraums (4).

## Revendications

1. Appareil de filtration comportant :
un tamis interne cylindrique ou conique (1) et un tamis externe (2) qui sont disposés de façon concentrique ; et
une paroi fixe en spirale (3) prévue dans une chambre de filtration (4) entre le tamis interne (1) et le tamis externe (2),
l'appareil de filtration permettant à une charge traitée d'être alimentée à partir d'un côté d'extrémité de la chambre de filtration (4) tandis qu'un gâteau est déchargé à partir de l'autre côté d'extrémité de la chambre de filtration (4), et un filtrat est déchargé vers l'extérieur à travers le tamis interne (1) et le tamis externe (2) ;
dans lequel le tamis interne (1) et/ou le tamis externe (2) peut/peuvent tourner autour d'un centre d'arbre et la paroi fixe en spirale (3) ne peut pas tourner, et
la paroi fixe en spirale (3) est supportée par une tige de support (19, 20) fixée à une extrémité et/ou à l'autre extrémité de la chambre de filtration (4), la tige de support (19, 20) étant disposée de manière à être amenée à proximité du, en contact avec le, tamis interne (1) et/ou du tamis externe (2), de sorte que la tige de support racle le gâteau adhérant aux/au tamis.

2. Appareil de filtration selon la revendication 1, dans lequel le tamis interne (1) et le tamis externe (2) peuvent être mis en rotation avec une différence en termes de vitesse de rotation entre le tamis interne (1) et le tamis externe (2).

3. Appareil de filtration selon les revendications 1 ou 2, dans lequel un pas de la paroi fixe en spirale (3) est raccourci depuis le côté d'extrémité vers l'autre côté d'extrémité.

4. Procédé de filtration, dans lequel un appareil de filtration selon la revendication 1 est utilisé, le procédé de filtration étant **caractérisé en ce qu'**il comporte le fait :
de mettre en rotation uniquement le tamis interne (1) et/ou le tamis externe (2) autour d'un centre d'arbre tandis que la paroi fixe en spirale (3) n'est pas mise en rotation ;
dans ce processus de manipulation, d'alimenter une charge traitée dans la chambre de filtration (4) à partir d'un côté d'extrémité de la chambre de filtration (4), de filtrer un liquide traité à travers le tamis interne (1) et le tamis externe (2), et de décharger chaque filtrat vers l'extérieur ; et
de décharger un gâteau à partir de l'autre côté d'extrémité de la chambre de filtration (4).
